# EUROPÄISCHE PATENTSCHRIFT

(11) **EP 1 622 784 B1**
(45) Veröffentlichungstag und Bekanntmachung des Hinweises auf die Patenterteilung: **11.10.2006**
(21) Anmeldenummer: 04723982.7
(22) Anmeldetag: 29.03.2004
(51) Int. Cl.: B60H 1/00

(54) **FEHLERERKENNUNGSSYTEM ZUR ERKENNUNG EINES FEHLERHAFTEN TEMPERATURSENSORS IN KRAFTFAHRZEUGEN**
ERROR DETECTION SYSTEM FOR IDENTIFYING A DEFECTIVE TEMPERATURE SENSOR IN MOTOR VEHICLES
SYSTEME DE DETECTION D'ERREURS DESTINE A LA DETECTION D'UN CAPTEUR DE TEMPERATURE DEFECTUEUX DANS DES VEHICULES

(30) Priorität: 11.04.2003 DE 10316606
(43) Veröffentlichungstag der Anmeldung: 08.02.2006
(73) Patentinhaber: Bayerische Motoren Werke Aktiengesellschaft, 80809 München (DE)
(72) Erfinder: WILKE, Frank, 81245 München (DE); GERUM, Robert, 82288 Kottgeisering (DE)
(86) Internationale Anmeldenummer: PCT/EP2004/003288
(87) Internationale Veröffentlichungsnummer: WO 2004/089667

(56) Entgegenhaltungen:
- EP-A- 1 273 781
- US-A- 4 432 210
- PATENT ABSTRACTS OF JAPAN Bd. 0092, Nr. 49 (M-419), 5. Oktober 1985 (1985-10-05) & JP 60 099710 A (HITACHI SEISAKUSHO KK; others: 01), 3. Juni 1985 (1985-06-03)
- PATENT ABSTRACTS OF JAPAN Bd. 0092, Nr. 15 (M-409), 3. September 1985 (1985-09-03) & JP 60 076416 A (HITACHI SEISAKUSHO KK; others: 01), 30. April 1985 (1985-04-30)

## Beschreibung

Die Erfindung betrifft ein Fehlererkennungssystem zur Erkennung eines fehlerhaften Temperatursensors in Kraftfahrzeugen nach dem Oberbegriff des Patentanspruchs 1.

Ein derartiges Fehlererkennungssystem ist beispielsweise aus der EP 1 273 781 A2 bekannt. Hierbei wird ausschließlich das Temperatursignal berücksichtigt, das von dem zu diagnostizierenden Temperatursensor geliefert wird.

Es ist Aufgabe der Erfindung, ein Fehlererkennungssystem eingangs genannter Art im Hinblick auf die Genauigkeit einerseits und auf die Einfachheit andererseits sowie im Hinblick auf den Ausschluss einer fehlerhaften Fehlererkennung zu verbessern.

Diese Aufgabe wird durch die Merkmale des Patentanspruchs 1 gelöst. Die Gegenstände der abhängigen Ansprüche sind vorteilhafte Weiterbildungen der Erfindung.

Erfindungsgemäß wird bei einem Fehlererkennungssystem zur Erkennung eines fehlerhaften Temperatursensors in Kraftfahrzeugen mit einer Brennkraftmaschine und mit mindestens einem elektronischen Steuergerät, das Mittel zur Erfassung der Standzeit zwischen dem Abstellen und dem Neustart der Brennkraftmaschine aufweist, nach einem Neustart der Brennkraftmaschine im elektronischen Steuergerät ein durch einen Umgebungsluft-Temperatursensor ermittelter Umgebungsluft-Temperaturwert mit einem durch mindestens einen Kühlmittel-Temperatursensor ermittelten Kühlmittel-Temperaturwert verglichen, wenn die erfasste Standzeit vor dem Neustart der Brennkraftmaschine größer als ein vorgegebener Mindest-Zeitwert war. Ein Fehler des Umgebungsluft-Temperatursensors wird erkannt, wenn die Differenz zwischen dem Kühlmittel-Temperaturwert und dem Umgebungsluft-Temperaturwert zumindest betragsmäßig größer als ein vorgegebener Schwellwert ist.

Der Erfindung liegt die Erkenntnis zugrunde, dass eine einfache Diagnose mittels einer Plausibilitätsüberwachung von Temperaturwerten unterschiedlicher Temperatursensoren, die jedoch zu bestimmten Betriebsbedingungen in einem bestimmten Verhältnis zueinander stehen müssen, möglich ist. Damit kann auf komplizierte Temperaturmodelle verzichtet werden, die üblicherweise auch für Temperatursensor-Diagnosezwecke verwendet werden.

Vorzugsweise läuft die Routine zur Fehlererkennung wiederholt, z.B. in einem Zeitraster von 100 ms, ab.

Die Routine zur Fehlererkennung kann abhängig von weiteren Bedingungen (zusätzlich zum Vorliegen eines (Neu-) Starts der Brennkraftmaschine und zum Vorliegen einer vorausgegangenen Mindest-Standzeit) stattfinden. Beispielsweise kann vorgegeben werden, dass eine Routine zur erfindungsgemäßen Fehlererkennung nur dann stattfindet, wenn
- sich die Brennkraftmaschine im Leerlaufbetrieb befindet oder wenn
- sich der Umgebungsluft-Temperaturwert innerhalb eines vorgegebenen Temperaturbandes liegt (z. B. zwischen 2°C (minimale Umgebungslufttemperatur) und 35 °C (maximale Umgebungslufttemperatur)), oder wenn
- sich der Kühlmittel-Temperaturwert bzw. ein anderer der Brennkraftmaschinentemperatur proportionaler Temperaturwert oberhalb einer definierten minimalen Kühlmitteltemperatur zum Einschalten der Diagnose liegt oder wenn
- eine maximale Motorlaufdauer (ggf. nur im Leerlauf) nach einem (Neu-) Start der Brennkraftmaschine noch nicht vergangen ist.

Weiterhin sollte zumindest kein Fehler des Temperatursensors bzw. der Temperatursensoren zur Ermittlung des Kühlmittel-Temperaturwertes erkannt worden sein.

In einer Weiterbildung der Erfindung wird ein Fehler des Umgebungsluft-Temperatursensors nur dann erkannt, wenn die Differenz zwischen dem Kühlmittel-Temperaturwert und dem Umgebungsluft-Temperaturwert zumindest für eine vorgegebene Dauer betragsmäßig größer als ein vorgegebener Schwellwert ist.

Vorzugsweise wird der Kühlmittel-Temperaturwert als Mittelwert aus der Kühleraustritts-Temperatur, also der Kühlmittel-Temperatur am Kühlerausgang, und der Brennkraftmaschinenaustritts-Temperatur, also der Kühlmittel-Temperatur am Kühlmittelausgang der Brennkraftmaschine, gebildet.

In einer vorteilhaften Weiterbildung der Erfindung wird im Steuergerät der zuletzt gemessene Umgebungsluft-Temperaturwert vor dem Abstellen der Brennkraftmaschine gespeichert und mit dem beim Neustart gemessenen Umgebungsluft-Temperaturwert verglichen. Die Fehlererkennung wird unterdrückt, wenn die Differenz zwischen dem zuletzt gemessenen Umgebungsluft-Temperaturwert vor dem Abstellen der Brennkraftmaschine und dem beim Neustart gemessenen Umgebungsluft-Temperaturwert größer als eine vorgegebene Start-Temperaturdifferenz ist.

Hierdurch soll eine fehlerhafte Fehlererkennung durch Sonderfälle verhindert werden, die zu ungewöhnlichen Temperaturdifferenzen zwischen dem Kühlmittel-Temperaturwert und dem Umgebungsluft-Temperaturwert führen können, wie z. B.
- Das Fahrzeug stand bei kalter Witterung über Nacht in einer warmen Garage; zum Neustart der Brennkraftmaschine wird das Garagentor geöffnet und kalte Umgebungsluft tritt ein;
   oder
- Der üblicherweise unter der Motorhaube angebrachte Umgebungsluft-Temperatursensor wird vor einem Neustart der Brennkraftmaschine kurzfristig durch Sonneneinstrahlung aufgewärmt.

In einer weiteren vorteilhaften Ausgestaltung der Erfindung wird im Steuergerät zunächst beim Neustart der Brennkraftmaschine ein erster gemessener Umgebungsluft-Temperaturwert gespeichert und mit einem zweiten nach einer vorgegebenen Motorlaufdauer erneut gemessenen Umgebungsluft-Temperaturwert verglichen. Die Fehlererkennung wird unterdrückt, wenn die Differenz zwischen diesem ersten und diesem zweiten Umgebungsluft-Temperaturwert größer als eine vorgegebene Betriebs-Temperaturdifferenz ist.

Hierdurch wird erkannt, ob der Umgebungsluft-Temperaturwert "eingefroren" ist. Dies würde also zu einer anderen Fehlererkennung führen als durch die oben genannte Plausibilitätsprüfung mit dem Kühlmittel-Temperaturwert.

## Patentansprüche

1. Fehlererkennungssystem zur Erkennung eines fehlerhaften Temperatursensors in Kraftfahrzeugen mit einer Brennkraftmaschine und mit mindestens einem elektronischen Steuergerät, das Mittel zur Erfassung der Standzeit zwischen dem Abstellen und dem Neustart der Brennkraftmaschine aufweist, **dadurch gekennzeichnet, dass** nach einem Neustart der Brennkraftmaschine im elektronischen Steuergerät ein durch einen Umgebungsluft-Temperatursensor ermittelter Umgebungsluft-Temperaturwert mit einem durch mindestens einen Kühlmittel-Temperatursensor ermittelten Kühimittel-Temperaturwert verglichen wird, wenn die erfasste Standzeit vor dem Neustart der Brennkraftmaschine größer als ein vorgegebener Mindest-Zeitwert war, und dass ein Fehler des Umgebungsluft-Temperatursensors erkannt wird, wenn die Differenz zwischen dem Kühlmittel-Temperaturwert und dem Umgebungsluft-Temperaturwert zumindest betragsmäßig größer als ein vorgegebener Schwellwert ist.

2. Fehlererkennungssystem nach Patentanspruch 1, **dadurch gekennzeichnet, dass** ein Fehler des Umgebungsluft-Temperatursensors erkannt wird, wenn die Differenz zwischen dem Kühlmittel-Temperaturwert und dem Umgebungstuft-Temperaturwert zumindest für eine vorgegebene Dauer betragsmäßig größer als ein vorgegebener Schwellwert ist.

3. Fehlererkennungssystem nach Patentanspruch 1 oder 2, **dadurch gekennzeichnet, dass** der Kühlmittel-Temperaturwert als Mittelwert aus der Kühleraustritts-Temperatur und der Brennkraftmaschinenaustritts-Temperatur gebildet wird.

4. Fehlererkennungssystem nach einem der Patentansprüche 1 bis 3, **dadurch gekennzeichnet, dass** im Steuergerät der zuletzt gemessene Umgebungsluft-Temperaturwert vor dem Abstellen der Brennkraftmaschine gespeichert und mit dem beim Neustart gemessenen Umgebungsluft-Temperaturwert verglichen wird und dass die Fehlererkennung unterdrückt wird, wenn die Differenz zwischen dem zuletzt gemessenen Umgebungsluft-Temperaturwert vor dem Abstellen der Brennkraftmaschine und dem beim Neustart gemessenen Umgebungsluft-Temperaturwert größer als eine vorgegebene Start-Temperaturdifferenz ist.

5. Fehlererkennungssystem nach einem der Patentansprüche 1 bis 4, **dadurch gekennzeichnet, dass** im Steuergerät zunächst beim Neustart der Brennkraftmaschine ein erster gemessener Umgebungsluft-Temperaturwert gespeichert und mit einem zweiten nach einer vorgegebenen Motorlaufdauer erneut gemessenen Umgebungsluft-Temperaturwert verglichen wird und dass die Fehlererkennung unterdrückt wird, wenn die Differenz zwischen diesem ersten und diesem zweiten Umgebungsluft-Temperaturwert größer als eine vorgegebene Betriebs-Temperaturdifferenz ist.

## Claims

1. A fault detection system for detecting a faulty temperature sensor in motor vehicles having an internal-combustion engine and at least one electronic control unit, which has means for detecting the downtime between turning off and restarting the internal-combustion engine, **characterised in that** after a restarting of the internal-combustion engine, an ambient air temperature value determined by an ambient air temperature sensor is compared in the electronic control unit with a coolant temperature value determined by at least one coolant temperature sensor, if the detected downtime before the restarting of the internal-combustion engine was greater than a defined minimum time value and **in that** a fault of the ambient air temperature sensor is detected when the difference between the coolant temperature value and the ambient air temperature value is greater, at least with respect to the amount, than a defined threshold value.

2. A fault detection system according to claim 1, **characterised in that** a fault of the ambient air temperature sensor is detected when the difference between the coolant temperature value and the ambient air temperature value is greater with respect to amount, at least for a defined period, than a defined threshold value.

3. A fault detection system according to claim 1 or claim 2, **characterised in that** the coolant temperature value is formed as an average value from the radiator outlet temperature and the internal-combustion engine outlet temperature.

4. A fault detection system according to any one of claims 1 to 3, **characterised in that** the last measured ambient air temperature value before the internal-combustion engine is switched off is stored in the control unit and compared with the ambient air temperature value measured at the restart and **in that** the fault detection is suppressed when the difference between the last-measured ambient air temperature value before the internal-combustion engine was switched off and the ambient air temperature value measured at the restart is greater than a defined starting temperature difference.

5. A fault detection system according to any one of claims 1 to 4, **characterised in that** a first measured ambient air temperature value is firstly stored in the control unit when the internal-combustion engine is restarted and compared with a second ambient air temperature value measured again after a defined engine running period and **in that** the fault detection is suppressed when the difference between this first and this second ambient air temperature value is greater than a defined operating temperature difference.

## Revendications

1. Système de détection d'erreurs pour l'identification d'un capteur de température défectueux dans des véhicules automobiles ayant un moteur à combustion interne et au moins un appareil de commande électronique présentant des moyens de détection du temps entre l'arrêt et le redémarrage du moteur à combustion interne
**caractérisé en ce qu'**
après un redémarrage du moteur à combustion interne, dans l'appareil de commande électronique, une valeur de température déterminée par un capteur de température de l'air environnant est comparée à une valeur de température, déterminée par au moins un capteur de température du liquide de refroidissement, lorsque le temps d'arrêt détecté avant le redémarrage du moteur à combustion interne est supérieur à une valeur de temps minimale prédéfinie, et
une erreur du capteur de température de l'air environnant est détectée lorsque la différence entre la valeur de température du liquide de refroidissement et la valeur de température de l'air environnant est supérieure à une valeur seuil prédéfinie.

2. Système de détection d'erreurs selon la revendication 1,
**caractérisé en ce qu'**
une erreur du capteur de température de l'air environnant est détectée lorsque la différence entre la valeur de température du liquide de refroidissement et la valeur de température de l'air environnant est supérieure au moins pour une durée prédéfinie, à une valeur seuil prédéfinie.

3. Système de détection d'erreurs selon la revendication 1 ou 2,
**caractérisé en ce que**
la valeur de température du liquide de refroidissement est calculée, en tant que valeur moyenne, à partir de la température de sortie du radiateur et de la température de sortie du moteur à combustion interne.

4. Système de détection d'erreurs selon l'une des revendications 1 à 3,
**caractérisé en ce que**
la dernière valeur de température de l'air environnant mesurée avant l'arrêt du moteur à combustion interne est enregistrée dans l'appareil de commande et comparée à la valeur de température de l'air environnant mesurée lors du redémarrage, et
la détection d'erreurs est désactivée si la différence entre la dernière valeur de température de l'air environnant mesurée avant l'arrêt du moteur à combustion interne et la valeur de température de l'air environnant mesurée lors du redémarrage est supérieure à une différence de température de démarrage prédéfinie.

5. Système de détection d'erreurs selon l'une des revendications 1 à 4,
**caractérisé en ce qu'**
une première valeur de température de l'air environnant mesurée lors du redémarrage du moteur à combustion interne est enregistrée dans l'appareil de commande, d'abord lors du redémarrage du moteur à combustion interne, et est comparée à une deuxième valeur de température de l'air environnant mesurée après une durée de fonctionnement prédéfinie du moteur, et
la détection d'erreurs est désactivée si la différence entre cette première valeur de température de l'air environnant et cette deuxième valeur de température de l'air environnant est supérieure à une différence de température de fonctionnement prédéfinie.
